# EUROPEAN PATENT APPLICATION

(11) **EP 2 375 470 A1**
(43) Date of publication of application: **12.10.2011**
(21) Application number: 10250727.4
(22) Date of filing: 07.04.2010
(51) Int. Cl.: H01M 2/04, H01M 2/12

(54) **Secondary battery end cap assembly**

(71) Applicant: ABC Taiwan Electronics Corporation, Yangmei Township T'ao yuan 32662 (TW)
(72) Inventor: Lee, Yeh-Shing, Yangmei Township Taoyuan County 32662 (TW); Hung, Chun-Hao, Yangmei Township Taoyuan County 32662 (TW); Tien, Jung-Chiang, Yangmei Township Taoyuan County 32662 (TW)
(74) Representative: Whitaker, Iain Mark

(57) **Abstract**

A secondary battery end cap assembly is extruded integrally, is provided on a cap plate and corresponds to a first perforation and a second perforation of the cap plate. The first perforation corresponds to a gas seal part of the end cap assembly and a side of the gas seal part is extended with a safety valve corresponding to the second perforation to release gas pressure, preventing the battery from being overly recharged that an interior of the battery is too hot and pressure increases, allowing the battery to explode to cause danger. The safety valve is made by a non-metallic material. Hence, a secondary battery end cap assembly is extruded integrally to effectively reduce manufacturing time and improve production efficiency. Furthermore, as the safety valve is penetrated and embedded by extruding a non-metallic material, gas tightness is enhanced without being unriveted and welding problems.

## Description

### BACKGROUND OF THE INVENTION

### a) Field of the Invention

The present invention relates to a secondary battery end cap assembly, and more particularly to a secondary battery end cap assembly which is extruded integrally to save manufacturing time, thereby increasing production efficiency, and a safety valve 32 of which is penetrated and embedded by extruding a non-metallic material to enhance gas tightness without being unriveted.

### b) Description of the Prior Art

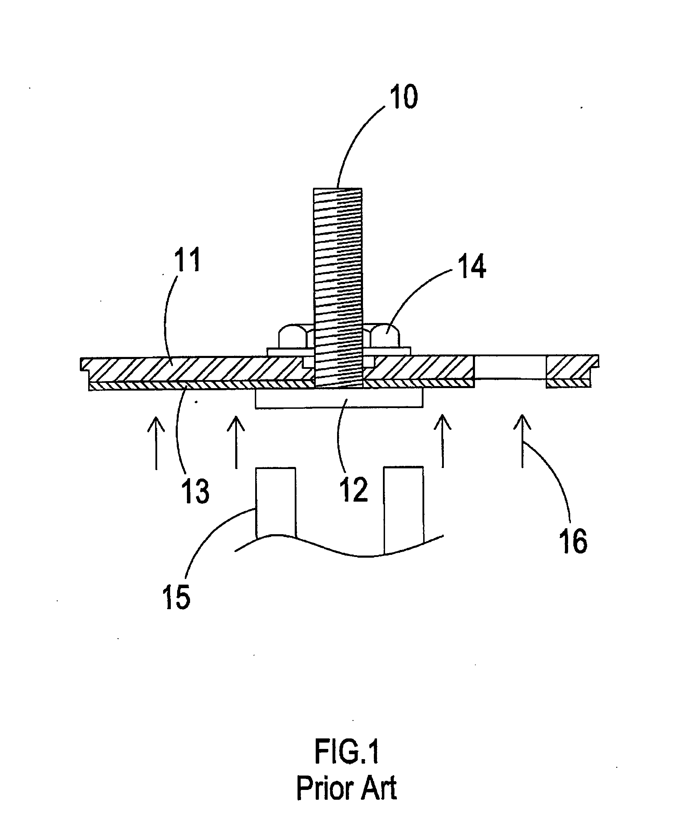

Referring to FIG. 1, it shows a cutaway view of a conventional battery end cap assembly which is provided with functions of sealing a battery and conducting electric energy inside or outside the battery when recharging or discharging. A battery terminal 10, a battery end cap 11 and a bottom seat 12 which are used conventionally are all designed in a circular shape, and a contact place between the bottom seat 12 and the battery end cap 11 is a full plane and is provided with a washer 13. In addition, the battery end cap 11 is welded to a canister. When an external power cord is tightly locked to the battery terminal 10, if the force exerted is so large that a friction force between the bottom seat 12 and the washer 13 is overcome, then it is easy to cause gas to leak out from the contact surface between the bottom seat 12 and the battery end cap 11 by rotation, allowing electrolyte 16 to leak out, thereby severely affecting performance and safety of the battery. Besides, for a conventional cylindrical secondary battery, the gas-sealed or insulating washer 13 is provided between a nut 14 and the battery end cap 11 or between the bottom seat 12 and the battery end cap 11. The insulating washer 13 is used primarily to insulate a lower collector plate 15 from the end cap 11 and will keep contacting with the electrolyte 16 in a normal condition; therefore, there will be no corrosion problem. However, if the gas leaks out from the contact surface between the battery terminal 10 and the canister by rotation or the electrolyte 16 leaks out, causing area pollution that a control circuit is abnormal to result in danger, then a safety problem can be caused and the battery can be short-circuited that the battery is unable to be used.

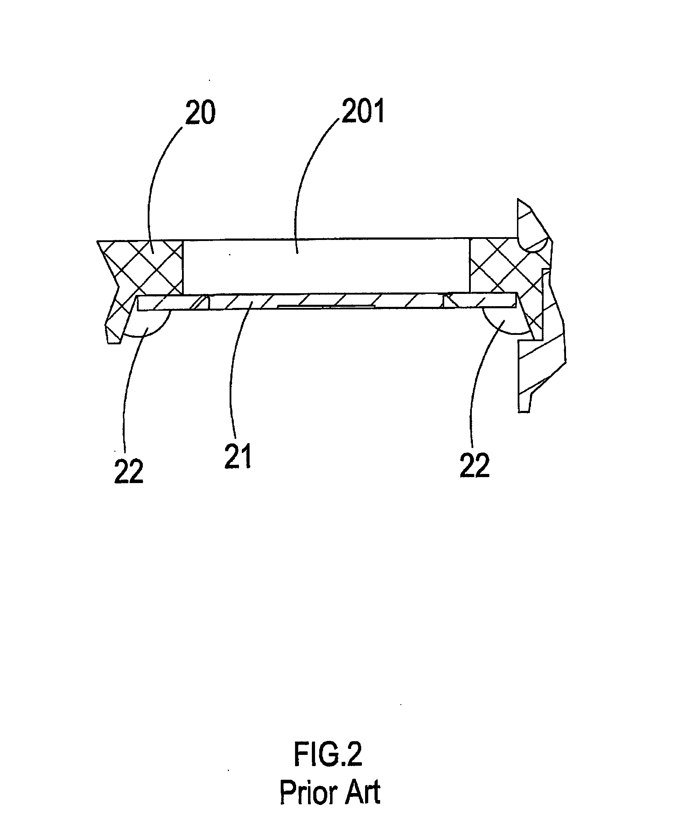

Referring to FIG. 2, it shows a cutaway view of a conventional battery safety valve which is primarily constituted by an upper cap plate 20 and a safety valve 21. A pre-determined position of the upper cap plate 20 is formed with a hole 201 and the safety valve 21 is assembled by laser welding, such that the safety valve 21 can be effectively fixed on the upper cap plate 20 and gas pressure in the battery can be controlled to achieve a decompression effect. Nevertheless, the common issues are:
1. To combine the upper cap plate 20 with the safety valve 21, the laser welding will melt a metal surface of the safety valve 21, allowing an opposite surface to be damaged that stress can be concentrated on the welding place.
2. Pits can be formed due to imperfect surface cleanness, oil and dust when welding.
3. Tack welding or false welding can occur.
4. Fissures can be formed.

Accordingly, how to solve the aforementioned issues and shortcomings of the prior art is a direction of research and development for improvement by the present inventor and related vendors.

### SUMMARY OF THE INVENTION

The primary object of the present invention is to provide a secondary battery end cap assembly which is formed integrally and is defined with a gas seal part and a safety valve. The gas seal part is defined with a locking hole and the end cap assembly is defined with protrusions for positioning. Moreover, a cap plate is defined with a first groove and the aforementioned safety valve is formed with a groove for fixing and is made by a non-metallic material, such that when the end cap assembly is to be assembled, the end cap assembly is disposed on the cap plate which is provided with a first perforation and a second perforation. The gas seal part of the end cap assembly corresponds to the first perforation and the safety valve corresponds to the second perforation; whereas, the protrusions of the gas seal part can be latched and positioned with a second groove of a conducting part. On the other hand, the first groove is latched and fixed with the cap plate by the protrusions on the end cap assembly, thereby accomplishing the assembling of the end cap assembly. By the aforementioned technologies, the issues existing in the prior art that, if the gas leaks out from the contact surface between the battery terminal and the canister by rotation or the electrolyte leaks out, causing area pollution that the control circuit is abnormal to result in danger, then a safety problem can be caused and the battery can be short-circuited that the battery is unable to be used, can be solved. In addition, the issues existing in a conventional battery safety valve that as the upper cap plate and the safety valve are assembled by laser welding, a metallic surface of the safety valve will be molten to damage an opposite surface, allowing stress to be concentrated at a welding place; pits can be formed by imperfect surface cleanness, oil and dust; and tack welding or false welding and fissures can be formed, can be solved, thereby achieving the practical progressiveness that manufacturing time can be saved by extruding integrally to increase production efficiency; and as the safety valve is penetrated and embedded by extruding a non-metallic material, gas tightness can be enhanced without being unriveted or welding problems.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a cutaway view of a conventional battery end cap assembly.
FIG. 2 shows a cutaway view of a conventional battery safety valve.
FIG. 3 shows a three-dimensional schematic view of a preferred embodiment of the present invention.
FIG. 4 shows a three-dimensional exploded view of the preferred embodiment of the present invention.
FIG. 5 shows a cutaway view of the preferred embodiment of the present invention.
FIG. 6 shows a schematic view of an end cap assembly which is assembled with a cap plate, according to the present invention.

### DETAILED DESCRIPTION OF THE PREFERRED EMBODIMENTS

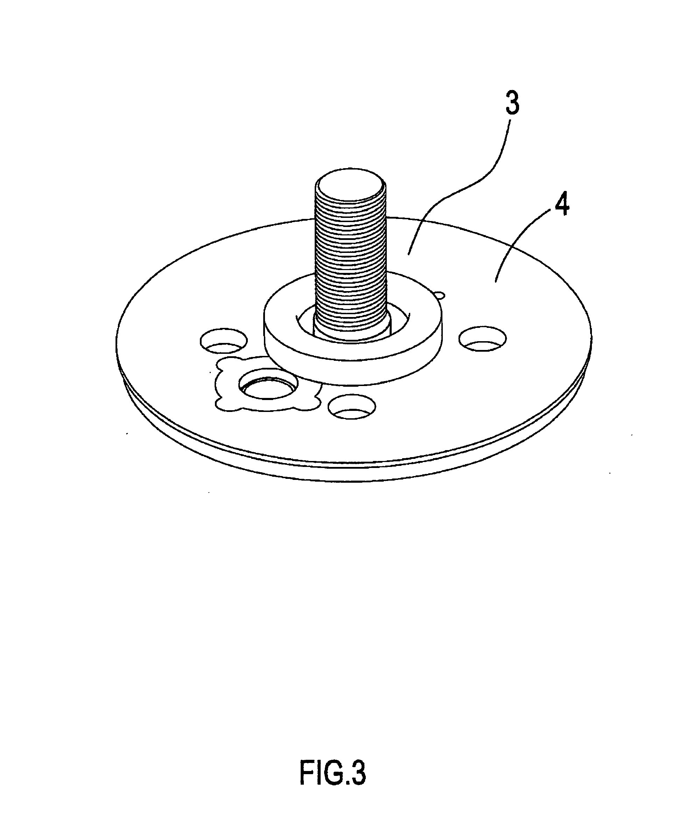

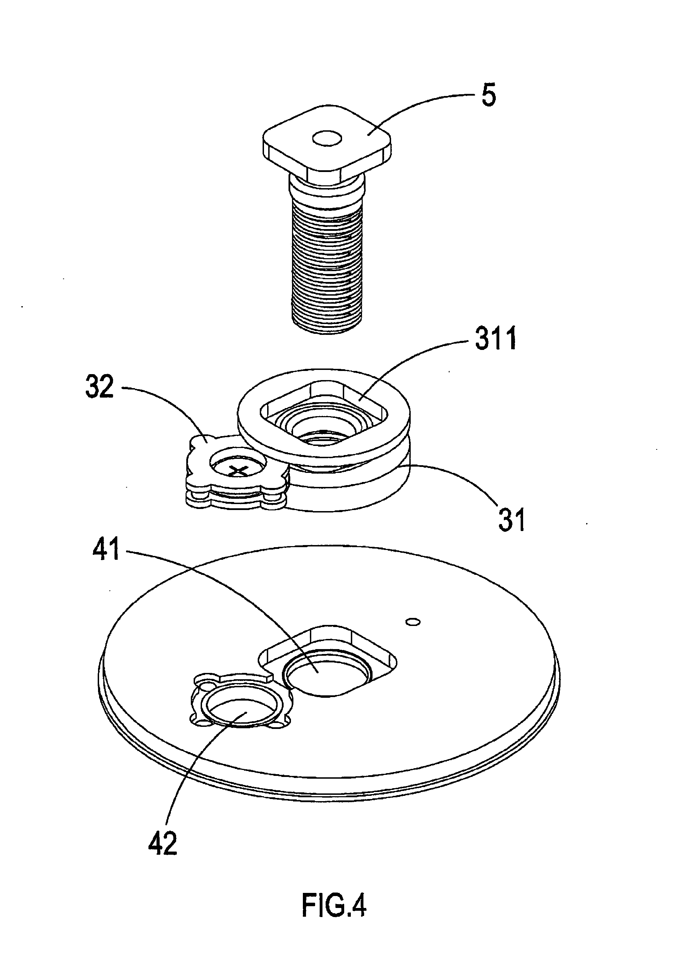

Referring to FIGS. 3 to 5, it shows a three-dimensional schematic view, a three-dimensional exploded view and a cutaway view, of a preferred embodiment of the present invention. As shown in the drawings, an end cap assembly 3 of the present invention is formed integrally and is provided on a cap plate 4, corresponding to a first perforation 41 and a second perforation 42 of the cap plate 4; whereas, the cap plate 4 is defined with a first groove 43. The end cap assembly 3 comprises primarily a gas seal part 31 which is defined with a locking hole 311 corresponding to the aforementioned first perforation 41; and a safety valve 32 which is extended from a side of the gas seal part 31. The safety valve 32 corresponds to the aforementioned second perforation 42 and can be used to release gas pressure. The first perforation 41 and the locking hole 311 are further transfixed with a conducting part 5, two sides of which are defined with a second groove 51. In addition, the end cap assembly 3 is defined with plural protrusions 33 which can be positioned with the first groove 43 and the second groove 51, and the second perforation 42 on the cap plate 4 is defined with a snap part 44. The safety valve 32 is formed with a groove 321 which can be latched with the snap part 44 and the safety valve 32 is made by a non-metallic material.

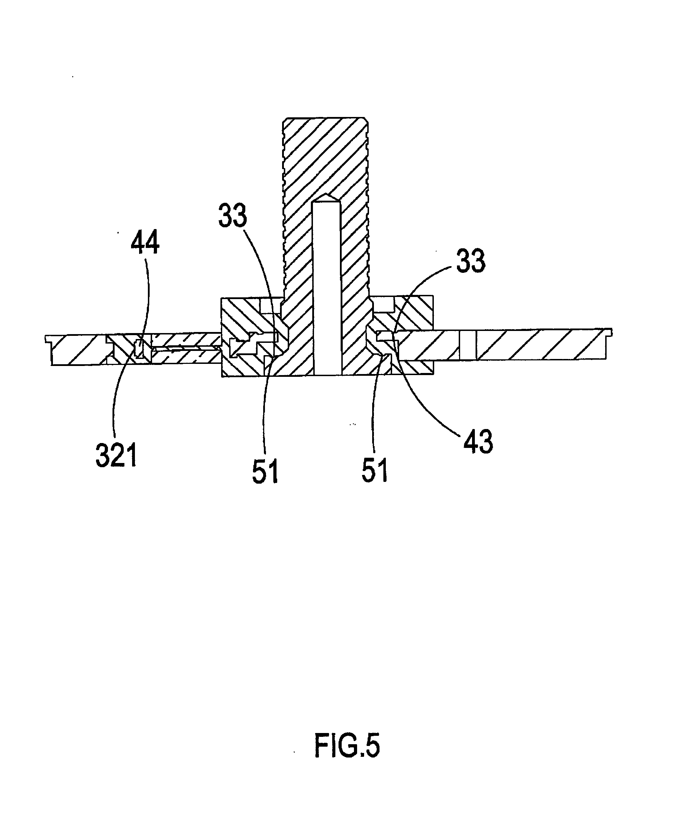

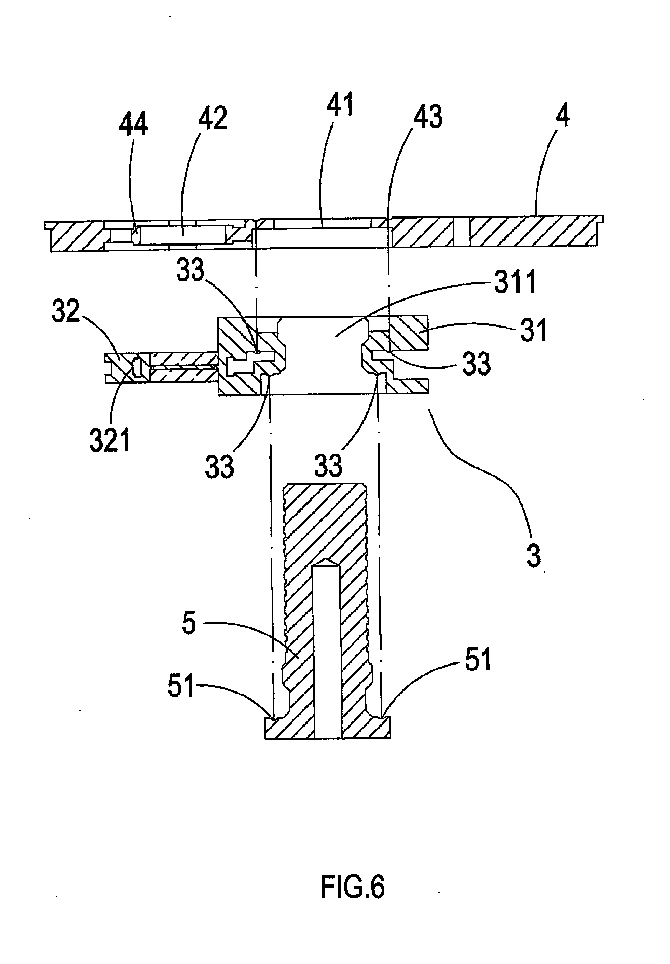

Referring to FIG. 5 and FIG. 6, it shows the cutaway view and a schematic view of the end cap assembly which is assembled with the cap plate, of the preferred embodiment of the present invention. As shown in the drawings, the cap plate 4 is defined with the first perforation 41 and the second perforation 42 which is defined with the snap part 44. The aforementioned two perforations 41, 42 are defined with the first groove 43 to be latched with the end cap assembly 3, whereas the end cap assembly 3 is defined with the gas seal part 31 and the safety valve 32 which prevents the battery from being overly recharged that an interior of the battery is too hot and pressure increases, causing the battery to explode and resulting in danger. The gas seal part 31 is defined with the locking hole 311 which corresponds to the aforementioned first perforation 41 and is defined with the plural protrusions 33 for positioning. Moreover, one side of the gas seal part 31 is extended with the safety valve 32 which corresponds to the aforementioned second perforation 42 and can be used to release the gas pressure. The safety valve 32 is formed with the groove 321 which can be latched with the snap part 44 and the safety valve 32 is made by a non-metallic material. On the other hand, the first perforation 41 and the locking hole 311 are transfixed with the conducting part 5 and two sides of the conducting part 5 are defined with the second groove 51 to position with the protrusions 33, such that when a user is to assemble the end cap assembly 3, the end cap assembly 3 is first extruded integrally, next the gas seal part 31 and the safety valve 32 of the end cap assembly 3 correspond respectively to the first perforation 41 and the second perforation 42 on the cap plate 4, and then the end cap assembly 3 is assembled with the cap plate 4. When assembling, the first groove 43 and the second groove 51 are tightly positioned with the protrusions 33 and the snap part 44 is latched with the groove 321, thereby accomplishing the assembling of the end cap assembly 3.

Referring to all the drawings, the present invention is actually provided with following advantages when compared with the prior art.

By being extruded integrally, the present invention can save manufacturing time to improve production efficiency. In addition, the safety valve 32 is penetrated and embedded by extruding a non-metallic material that the gas tightness can be enhanced without being unriveted and welding problems.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A secondary battery end cap assembly which is formed integrally and is provided on a cap plate 4, corresponding to a first perforation 41 and a second perforation 42 of the cap plate 4, with the cap plate 4 being defined with a first groove 43; the end cap assembly 3 comprising:
a gas seal part 31 which is defined with a locking hole 311 corresponding to the first perforation 41; and
a safety valve 32 which is extended from a side of the gas seal part 31 and corresponds to the second perforation 42 to release gas pressure.

2. The secondary battery end cap assembly according to claim 1, wherein the first perforation 41 and the locking hole 311 are further transfixed with a conducting part 5, two sides of which are defined with a second groove 51.

3. The secondary battery end cap assembly according to claim 1, wherein the end cap assembly 3 is defined with plural protrusions 33 for positioning.

4. The secondary battery end cap assembly according to claim 1, wherein the second perforation 42 on the cap plate 4 is defined with a snap part 44.

5. The secondary battery end cap assembly according to claim 1, wherein the safety valve 32 is formed with a groove 321 for fixing.

6. The secondary battery end cap assembly according to claim 1, wherein the safety valve 32 is made by a non-metallic material.
